(19) Europäisches Patentamt
European Patent Office
Office européen des brevets

(11) Publication number: **0 405 300 B1**

# (12) EUROPEAN PATENT SPECIFICATION

(45) Date of publication of patent specification: **02.11.94**

(51) Int. Cl.$^5$: **C08G 18/42**, C09J 175/06, B32B 15/08, F16F 9/30

(21) Application number: **90111546.9**

(22) Date of filing: **19.06.90**

(54) **Damping viscoelastic resin, damping adhesive and composite made of them and steel plates.**

(30) Priority: **30.06.89 JP 169123/89**

(43) Date of publication of application:
**02.01.91 Bulletin 91/01**

(45) Publication of the grant of the patent:
**02.11.94 Bulletin 94/44**

(84) Designated Contracting States:
**DE FR GB**

(56) References cited:
**EP-A- 0 194 452**
**US-A- 4 859 523**

**CHEMICAL ABSTRACTS, vol. 112, no. 14, abstract-nr 120407r, Columbus, Ohio, US; & JP-A-1168720**

**CHEMICAL ABSTRACTS, vol. 108, no. 20, abstract-nr 168762x, Columbus, Ohio, US;& JP-A-62190215**

(73) Proprietor: **Chisso Corporation**
**6-32, Nakanoshima 3-chome**
**Kita-ku**
**Osaka-shi Osaka-fu (JP)**

(72) Inventor: **Maru, Junsuke**
**5-26-1, Makuharihongou**
**Chiba-shi, Chiba-ken (JP)**
Inventor: **Kanai, Nobuo**
**96-4, Dainichi**
**Yotsukaido-shi, Chiba-ken (JP)**
Inventor: **Inoue, Kouji**
**51-1, Yayoidai,**
**Izumi-ku**
**Yokohama-shi, Kanagawa-ken (JP)**
Inventor: **Yatabe, Masae**
**538-1, Iidaoka**
**Odawara-shi, Kanagawa-ken (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 405 300 B1

## Description

### BACKGROUND OF THE INVENTION

#### Field of the Invention

This invention relates to a viscoelastic resin for damping materials, an adhesive for damping materials and a damping steel plate.

#### Description of the Prior Art

In the present situation in which the development of a machine civilization growing motorization causes increasing noise pollution, it is highly demanded to prevent noise. In meeting such a demand, damping steel plates constituted of steel plates and an intermediate layer having an oscillation attenuating function sandwiched therebetween have recently been developed. For example, a steel plate constituted of two sheets of a thin steel plate (not thicker than 1 mm.) and a thin (for example, about 0.1 mm - 0.6 mm) a plastic viscoelastic material layer sandwiched between the thin steel plate can rapidly convert vibrational energy applied thereto to a thermal energy by shearing deformation of the viscoelastic material layer and thereby accoustic vibration can be effectively dissipated.

The damping steel plates are widely used for vibrating bodies such as motors, blowers and the like, construction materials such as stairs, doors, shutters, floors and the like, and motorcar parts such as engine covers, oil pans and the like.

Heretofore, as a viscoelastic material constituting an intermediate layer for damping steel plates, monomers such as vinyl acetate, vinyl chloride and the like, copolymers such as vinyl acetate-ethylene copolymers, vinyl acetate-ethylene-acrylic acid copolymers, isocyanate prepolymer-vinyl monomer copolymers, modified polyethylene, modified polypropylene, epoxy resins, urethane-modified epoxy resins are known. Japanese Patent Application Laid-open No. 48321/1988 discloses a viscoleastic resin for damping materials produced by reacting polyester diols, aliphatic polyesters and diisocyanates and further reacting the reaction product with neopentyl glycol.

However, when damping steel plates using such viscoelastic materials are employed, the damping ability can be exhibited only at a particularly narrow range of temperature, and when it is attempted to enhance the damping ability, the heat resistance is lowered. Further, the adhesivity of the viscoelastic material to metals is so low that another particular adhesive is necessary.

In general, it is said that, for purposes of exhibiting a stable damping ability, damping plates necessitate a vibration energy loss function ($\eta$) of 0.03 or more, preferably 0.05 or more as determined by a mechanical impedance method Cantilever method, see experimental part.

### SUMMARY OF THE INVENTION

It is an object of the present invention to provide a viscoelastic resin for damping materials, exhibiting excellent damping ability over a wide range of temperature.

It is another object of the present invention to provide a viscoelastic resin for damping material, exhibiting a high heat resistance.

It is a further object of the present invention to provide an adhesive for damping materials exhibiting excellent adhesivity to the base material, for example, steel and excellent damping ability.

It is still another object of the present invention to provide an adhesive for damping materials of excellent heat resistance.

It is still a further object of the present invention to provide an adhesive for damping materials exhibiting excellent damping ability over a wide range of temperature.

It is still another object of the present invention to provide a damping steel plate exhibiting excellent damping ability over a wide range of temperature.

It is still a further object of the present invention to provide a damping steel plate exhibiting excellent heat resistance.

According to one aspect of the present invention, a viscoelastic resin for a damping material is provided, which is produced by reacting a diisocyanate, dicarboxylic acid or diamine with a base polymer selected from the group consisting of a polyester produced by reacting a dicarboxylic acid with a diol of the formula,

HO - R - OH

where R is an alkylene group which has at least one straight and/or branched alkyl side chain containing from 3 to 10 carbon atoms and of which the main chain connecting the two OH groups has from 3 to 12 carbon atoms and a polyurethane produced by reacting said diol with a diisocyanate.

According to another aspect of the present invention, a damping adhesive is provided which comprises a mixture of a member selected from the group consisting of diisocyanates, dicarboxylic acids and diamines and a base polymer selected from the group consisting of a polyester produced by reacting a dicarboxylic acid with a diol of the formula,

HO - R - OH

where R is an alkylene group which has at least one straight and/or branched alkyl side chain containing from 3 to 10 carbon atoms and of which the main chain connecting the two OH groups has from 3 to 12 carbon atoms and a polyurethane produced by reacting said diol with a diisocyanate, or a reaction product thereof.

According to a further aspect of the present invention, there is provided a damping steel plate which comprises steel plates and a layer of a viscoelastic resin for a damping material or an adhesive layer produced by reacting a diisocyanate, dicarboxylic acid or diamine with a base polymer selected from the group consisting of a polyester produced by reacting a dicarboxylic acid with a diol of the formula,

HO - R - OH

where R is an alkylene group which has at least one straight and/or branched alkyl side chain containing from 3 to 10 carbon atoms and of which the main chain connecting the two OH groups has from 3 to 12 carbon atoms and a polyurethane produced by reacting said diol with a diisocyanate, and the layer intervening between the steel plates.

## BRIEF DESCRIPTION OF THE DRAWING

FIG. 1 represents the relationship between loss function and temperature as shown in the working examples and comparative examples, "a" - "e" are shown in Table 1.

## DESCRIPTION OF THE PREFERRED EMBODIMENT

The polyester produced by reacting diol with a dicarboxylic acid as a base polymer of the present invention has preferably a molecular weight ranging from 500 to 50,000. By adjusting the molar ratio of diol to dicarboxylic acid, it is possible to prepare a base polymer having OH group or COOH group as the end groups or a base polymer having both OH and COOH groups as the end groups. Each of them can be used in the present invention as the base polymer.

The polyurethane produced by reacting a diol with a diisocyanate as a base polymer has preferably a molecular weight ranging from 500 to 50,000. By controlling the molar ratio of diol to diisocyanate, a base polymer can be prepared which has NCO group or OH group, or both of them as the polymer end groups. According to the present invention, each of them can be used in the present invention.

Viscoelastic resins for damping materials of the present invention can be produced by reacting the base polymer with a dicarboxylic acid, diamine or diisocyanate. The amount of a dicarboxylic acid, diamine or diisocyanate is preferably equimolar to the end groups of the base polymer, although variations of 20 - 30 % can be tolerated.

The damping adhesive of the present invention may be composed of a viscoelastic resin for damping materials itself of the present invention and also may be a mixture of a viscoelastic resin of the present invention and a crosslinking type resin. Furthermore, the damping adhesive may comprise a mixture of a base polymer and a diisocyanate, a diamine or a dicarboxylic acid or a reaction product thereof. These materials may be formed into adhesives by usually adding a solvent or an additive. The damping steel plate of the present invention has a sandwich structure constituted of steel plates and a viscoelastic resin or an adhesive of the present invention sandwiched therebetween. This arrangement is subsequently subjected to heating and pressing.

Dicarboxylic acids used in the present invention may be saturated aliphatic acids such as adipic acid and sebacic acid, or unsaturated aliphatic acids such as maleic acid or phthalic acid.

Examplary suitable diisocyanates used in the present invention may be aliphatic diisocyanates such as pentanediisocyanate, hexanediisocyanate, dipropyl ether diisocyanate, and the like, aromatic diisocyanates such as tolylenediisocyanate, phenylenediisocyanate, diphenyldiisocyanate, diphenylmethane diisocyanate, xylenediisocyanate and the like, and alicyclic diisocyanates such as diisocyanatodimethylbenzol or diisocyanatomethylcyclohexane.

Diamines used in the present invention may be aliphatic diamines such as ethylenediamine, propylenediamine and the like, and aromatic diamines such as phenylene diamine or 4,4'-diaminodiphenylsulfone.

Crosslinking type resins used in the present invention may be various polyisocyanates, various epoxy resins, polyamides, polyvinyl acetate, ethylene-vinyl acetate copolymer, polyvinyl formal, polyvinyl butyral, polyamines, and polyamide amines.

Exemplary suitable diols include:

2-n-butyl-2-ethyl-1,3-propanediol

(3,3-dimethylolheptane)

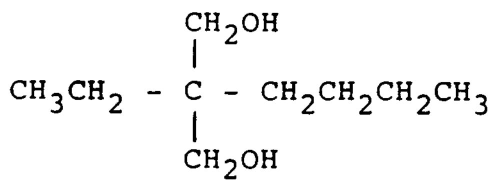

2-propyl-2-methyl-1,3-propanediol

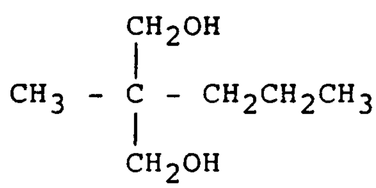

2-ethyl-1,3-hexanediol

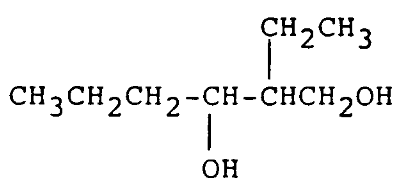

2,2,4-trimethyl-1, 3-pentanediol

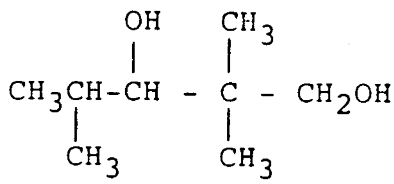

2-n-butyl-2-methyl-1, 6-hexanediol

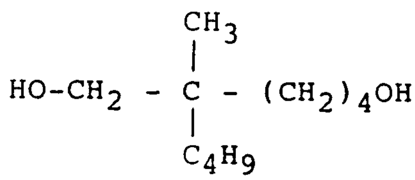

2-n-hexyl-2-ethyl-1, 3-propanediol

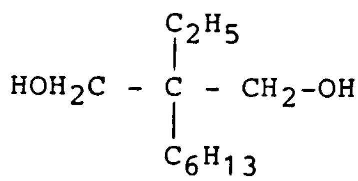

Diols having a main chain containing side chains such as $CH_3$ other than those defined in the present invention may be used as far as the diols satisfy the requirements of the invention as specified in claim 1. Such side chains do not affect the invention adversely. For example, even if the main chain has alkyl side chains containing 1 - 2 carbon atoms in addition to the side chain as defined in claim 1, the diol may be used within the scope of the present invention although said alkyl side chain does not contribute to the advantage of the present invention.

The following examples are given for illustrating the present invention, e.g. the viscoelastic resin, adhesive and steel plate, but should not be construed as limiting the present invention.

In the following examples, the adhesive strength of materials was measured by the methods as shown below.

| | |
|---|---|
| Thickness of adhesive layer: | 40 - 60 μm |
| Peel strength: | Peeling strength (kg/cm) when peeling is effected at a speed of 50 mm/min. of a tensile tester according to T-type peeling test (JIS-K 6854) |
| Peel strength after a heat resistance test: | Peeling strength after a heat treatment at 100 °C for 300 hours |
| Shearing strength: | Following JIS-K 6850 |

The number average molecular weight was measured by an ester value measuring method (JIS K 0070), and the loss function ($\eta$) by a cantilever method with a sandwitched steel plate test piece of 10 mm X 260 mm at 0 - 140 °C at a frequency of 500 Hz.

Example 1

In a one liter flask were placed 200 g of 2-methyl-2-butyl-1, 3-propanediol (hereinafter referred to as "DMH"), 146 g of adipic acid and 0.2 g of antimony trioxide as an esterifying catalyst, and an esterifying reaction was effected at atmospheric pressure at 195 - 220 °C for 6 hours in an atmosphere of nitrogen, and thereby 280 g of a polyester (p) having a number average molecular weight of 4000 was produced. 100 g of

the resulting polyester (p) and 6.3 g of diphenylmethane diisocyanate (hereinafter referred to as "MDI") were dissolved in a mixed solvent of 35 g of methyl ethyl ketone and 70 g of dimethylformamide to prepare an adhesive for damping.

The adhesive thus prepared was applied to a surface of a steel plate of 0.4 mm thick, heated to remove the solvent, and the resulting adhesive layer was superposed on another steel plate of 0.4 mm thick. The resulting steel plate material constituted of two steel plates between which the adhesive was sandwiched was inserted to a hot press to thermally pressing at 160 °C under a pressure of 10 $kg/cm^2$ for 60 min. and thereby a sandwich steel plate (a) usable as a damping steel plate was obtained.

The adhesive strengths such as peel strength and shearing strength and loss function at various temperatures were measured, and the results are shown in Table 1.

Example 2

100 g of the polyester (p) used in Example 1 was placed in a one liter flask and 124 g of a mixed solvent of methyl ethyl ketone and dimethylformamide and 12.6 g of MDI were added thereto and heated with stirring at 60 °C for 2 hours to effect the reaction. Further, 10.0 g of 4,4′-diaminodiphenylamine was mixed with the resulting reaction mixture and the reaction therebetween was conducted to give a viscoelastic resin solution for damping materials (246.6 g).

100 g of the resin solution was mixed with 15 g of an epoxy resin of epoxy equivalent of 200 to obtain an adhesive for damping. The resulting adhesive was used to fabricate a sandwich steel plate (b) following the procedure of Example 1, and the adhesive strength and loss function were measured. The results are shown in Table 1.

Example 3

Following the procedure of Example 1, an esterification reaction of 164 g. of 1-propyl-2-ethyl-1,3-propanediol, 146 g of adipic acid and 0.2 g of antimony trioxide was carried out to give 178 g of a polyester (q) having a number average molecular weight of 2000. 100 g of the polyester (q) and 120 g of MDI were dissolved in a mixed solvent of 35 g of methyl ethyl ketone and 70 g of dimethylformamide to prepare an adhesive for a damping material.

Following the procedure of Example 1, the resulting adhesive was used to produce a damping steel plate (c). The adhesive strength and loss function were measured, and the results are shown in Table 1.

TABLE 1

| | Steel plate | Change of loss function (%) with temperature (Cantilever method; 500 Hz) | | | | | Peel strength kg/cm | | Shearing strength kg/cm2 |
|---|---|---|---|---|---|---|---|---|---|
| | | 0°C | 30°C | 60°C | 100°C | 140°C | Ordinary | After heat resistance test | |
| Example 1 | a | 0.25 | 0.16 | 0.11 | 0.10 | 0.12 | 7.8 | 7.6 | 110 |
| Example 2 | b | 0.08 | 0.17 | 0.16 | 0.14 | 0.15 | 9.3 | 9.0 | 125 |
| Example 3 | c | 0.11 | 0.28 | 0.20 | 0.17 | 0.16 | 8.8 | 8.5 | 133 |
| Comparative Example 1 | d | 0.0023 | 0.0026 | 0.0046 | 0.0062 | 0.0045 | 3.2 | 1.5 | 98 |
| Comparative Example 2 | e | 0.0041 | 0.0053 | 0.0073 | 0.012 | 0.0094 | 2.4 | 0.8 | 110 |

Comparative Example 1

Repeating the procedure of Example 1 except that 77 g of ethyleneglycol and 146 g. of adipic acid were polymerized, there was produced 190 g of a polyester (r) having a number average molecular weight

of 2000.

To 100 g of the polyester (r) was added 125 g of MDI, and further 125 g of a mixed solvent of methyl ethyl ketone and dimethylformamide followed by mixing and stirring. The resulting mixture was applied to a steel plate of 0.4 mm thickness and treated in the same manner described in Example 1 to produce a sandwich steel plate (d). The same measurement described in Example 1 was conducted and the result is shown in Table 1.

Comparative Example 2

Repeating the procedure of Example 1 except that a mixture of 71 g of 1,6-hexanediol and 62 g of neopentylglycol (molar ratio of 1 : 1) was polymerized with 146 g of adipic acid, substantially equimolar amount to the mixture, there was obtained 240 g of a polyester (s) having a number average molecular weight of 2000.

To 100 g of the polyester (s) was added 25 g of MDI, and further 125 g of a mixed solvent of methyl ethyl ketone and dimethylformamide was added, mixed and stirred. Then, a reaction was carried out by heating at 60 °C for two hours and 20 g of 4,4′-diaminodiphenylamine was added and stirred for additional one hour to produce 270 g of a urethane reaction liquid mass. The resulting liquid mixture of resin (100 g) was mixed with 11 g of an epoxy resin in the same way described in Example 2, and the resulting liquid mixture was applied to a steel plate of 0.4 mm thick and treated in the same way described in Example 1 to produce a sandwich steel plate (e). The result of measurement in the same way described in Example 1 is shown in Table 1.

The viscoelastic resin for a damping material or the adhesive of the present invention is a polymer having long alkyl side chains having 3 - 10 carbon atoms. The alkyl side chains cause minimize intermolecular cohesion. This is believed to be the cause for the high damping ability of the polymer as compared with conventional resins.

As is clear from Fig. 1, damping steel plates (a), (b) and (c) constituted of two steel plates and a layer composed of an adhesive of the present invention sandwiched therebetween exhibit a high loss function ($\eta$) over a wide range of temperature such as 20 - 140 °C as compared with those (d) and (e) which are comparative examples.

By comparing the Examples of the present invention with the Comparative Examples in Table 1 as to shearing strength and peel strength, it is clear that the adhesive strength of the adhesive according to the present invention is excellent.

In addition, as shown by Table 1, the viscoelastic resin for damping materials and adhesive according to the present invention exhibit high heat resistance.

In view of the foregoing, it results that the viscoelastic resins for damping materials, adhesives, and steel plates of the present invention exhibit excellent damping ability over a wide range of temperature and, in addition, excellent adhesion property and high heat resistance.

**Claims**

**1.** A viscoelastic resin as a damping material produced by reacting a diisocyanate, dicarboxylic acid or diamine with a base polymer selected from the group consisting of (a) a polyester produced by reacting a dicarboxylic acid with a diol of the formula,

HO - R - OH

where R is an alkylene group which has at least one straight and/or branched alkyl side chain containing from 3 to 10 carbon atoms and of which the main chain connecting the two OH groups has from 3 to 12 carbon atoms and (b) a polyurethane produced by reacting said diol with a diisocyanate.

**2.** The viscoelastic resin according to claim 1 in which the base polymer has a molecular weight of from 500 to 50000.

**3.** A damping adhesive which comprises a mixture of a member selected from the group consisting of diisocyanates, dicarboxylic acids and diamines and a base polymer selected from the group consisting of (a) a polyester produced by reacting a dicarboxylic acid with a diol of the formula,

HO - R - OH

where R is an alkylene group which has at least one straight and/or branched alkyl side chain containing from 3 to 10 carbon atoms and of which the main chain connecting the two OH groups has from 3 to 12 carbon atoms and (b) a polyurethane produced by reacting said diol with a diisocyanate, or a reaction product thereof.

**4.** The adhesive according to claim 3 which comprises a mixture of the polyester and the diisocyanate.

**5.** The adhesive according to claim 3 which comprises a mixture of a reaction product of the polyester and the diisocyanate and an epoxy resin.

**6.** A damping steel plate which comprises steel plates and a layer of a viscoelastic resin for a damping material or an adhesive layer produced by reacting a diisocyanate, dicarboxylic acid or diamine with a base polymer selected from the group consisting of (a) a polyester produced by reacting a dicarboxylic acid with a diol of the formula,

HO - R - OH

where R is an alkylene group which has at least one straight and/or branched alkyl side chain containing from 3 to 10 carbon atoms and of which the main chain connecting the two OH groups has from 3 to 12 carbon atoms and (b) a polyurethane produced by reacting said diol with a diisocyanate, and the layer intervening between the steel plates.

**Patentansprüche**

**1.** Viskoelastisches Harz als Dämpfungsmaterial, hergestellt durch Umsetzen eines Diisocyanats, einer Dicarbonsäure oder eines Diamins mit einem Grundpolmyer, ausgewählt aus
a) einem Polyester, der gebildet wurde durch Umsetzen einer Dicarbonsäure mit einem Diol der Formel

HO - R - OH,

worin R eine Alkylengruppe mit wenigstens einer geradkettigen und/oder verzweigtkettigen Alkylseitenkette ist, enthaltend 3 bis 10 Kohlenstoffatome, und bei welcher die Hauptkette, welche die beiden OH-Gruppen verbindet, 3 bis 12 Kohlenstoffatome hat, und
b) einem Polyurethan, hergestellt durch Umsetzen des Diols mit einem Diisocyanat.

**2.** Viskoelastisches Harz gemäß Anspruch 1, bei welchem das Grundpolymer ein Molekulargewicht von 500 bis 50000 hat.

**3.** Dämpfungsklebstoff, umfassend eine Mischung aus einem Glied, ausgewählt aus der Gruppe bestehend aus Diisocyanaten, Dicarbonsäuren und Diaminen und einem Grundpolymer, ausgewählt aus der Gruppe bestehend aus
a) einem Polyester, der hergestellt wurde durch Umsetzen einer Dicarbonsäure mit einem Diol der Formel

HO - R - OH,

worin R eine Alkylengruppe mit wenigstens einer geradkettigen und/oder verzweigtkettigen Seitenkette ist, enthaltend 3 bis 10 Kohlenstoffatome, und bei welcher die Hauptkette, welche die beiden OH-Gruppen verbindet, 3 bis 12 Kohlenstoffatome hat, und
b) einem Polyurethan, das gebildet wurde durch Umsetzen des Diols mit einem Diisocyanat, oder einem Reaktionsprodukt davon.

**4.** Klebstoff gemäß Anspruch 3, umfassend eine Mischung aus dem Polyester und dem Diisocyanat.

**5.** Klebstoff gemäß Anspruch 3, umfassend eine Mischung aus einem Reaktionsprodukt des Polyesters und dem Isocyanat und einem Epoxyharz.

6. Dämpfungsstahlplatte, umfassend Stahlplatten und eine Schicht aus einem viskoelastischen Harz für ein Dämpfungsmaterial oder eine Klebeschicht, hergestellt durch Umsetzen eines Diisocyanats und einer Dicarbonsäure oder eines Diamins mit einem Grundpolymer, ausgewählt aus der Gruppe, bestehend aus einem

a) Polyester, der gebildet wurde durch Umsetzen einer Dicarbonsäure mit einem Diol der Formel

HO - R - OH

worin R eine Alkylengruppe mit wenigstens einer geradkettigen und/oder verzweigtkettigen Alkylseitenkette ist, enthaltend 3 bis 10 Kohlenstoffatome, und bei welcher die Hauptkette, welche die beiden OH-Gruppen verbindet, 3 bis 12 Kohlenstoffatome hat, und

b) einem Polyurethan, das gebildet wurde durch Umsetzen des Diols mit einem Diisocyanat, wobei sich die Schicht zwischen den Stahlplatten befindet.

## Revendications

1. Résine visco-élastique, comme matériau amortisseur, produite par réaction d'un diisocyanate, d'un acide dicarboxylique ou d'une diamine avec un polymère de base choisi dans le groupe constitué par

(a) un polyester produit par réaction d'un acide dicarboxylique avec un diol de formule,

HO - R - OH

dans laquelle R représente un groupe alkylène qui a au moins une chaîne latérale alkylique linéaire et/ou ramifiée contenant de 3 à 10 atomes de carbone et dont la chaîne principale reliant les deux groupes OH contient de 3 à 12 atomes de carbone et

(b) un polyuréthane produit par réaction dudit diol avec un diisocyanate.

2. Résine visco-élastique selon la revendication 1, dans laquelle le polymère de base présente une masse moléculaire comprise entre 500 et 50 000.

3. Adhésif amortisseur qui comprend un mélange d'un élément choisi dans le groupe constitué par des diisocyanates, des acides dicarboxyliques et des diamines et d'un polymère de base choisi dans le groupe constitué par (a) un polyester produit par réaction d'un acide dicarboxylique avec un diol de formule,

HO - R - OH

dans laquelle R représente un groupe alkylène qui a au moins une chaîne latérale alkylique linéaire et/ou ramifiée contenant de 3 à 10 atomes de carbone et dont la chaîne principale reliant les deux groupes OH contient de 3 à 12 atomes de carbone et (b) un polyuréthane produit par réaction dudit diol avec un diisocyanate, ou un de leurs produits de réaction.

4. Adhésif selon la revendication 3, qui comprend un mélange du polyester et du diisocyanate.

5. Adhésif selon la revendication 3, qui comprend un mélange du produit de réaction du polyester et du diisocyanate et d'une résine époxy.

6. Tôle d'acier amortisseuse qui comprend des tôles d'acier et une couche d'une résine visco-élastique pour un matériau amortisseur ou une couche d'adhésif produit par réaction d'un diisocyanate, d'un acide dicarboxylique ou d'une diamine avec un polymère de base choisi dans le groupe constitué par (a) un polyester produit par réaction d'un acide dicarboxylique avec un diol de formule,

HO - R - OH

dans laquelle R représente un groupe alkylène qui a au moins une chaîne latérale alkylique linéaire et/ou ramifiée contenant de 3 à 10 atomes de carbone et dont la chaîne principale reliant les deux groupes OH contient de 3 à 12 atomes de carbone et (b) un polyuréthane produit par réaction dudit diol avec un diisocyanate, la couche étant placée entre les plaques d'acier.

FIG. 1

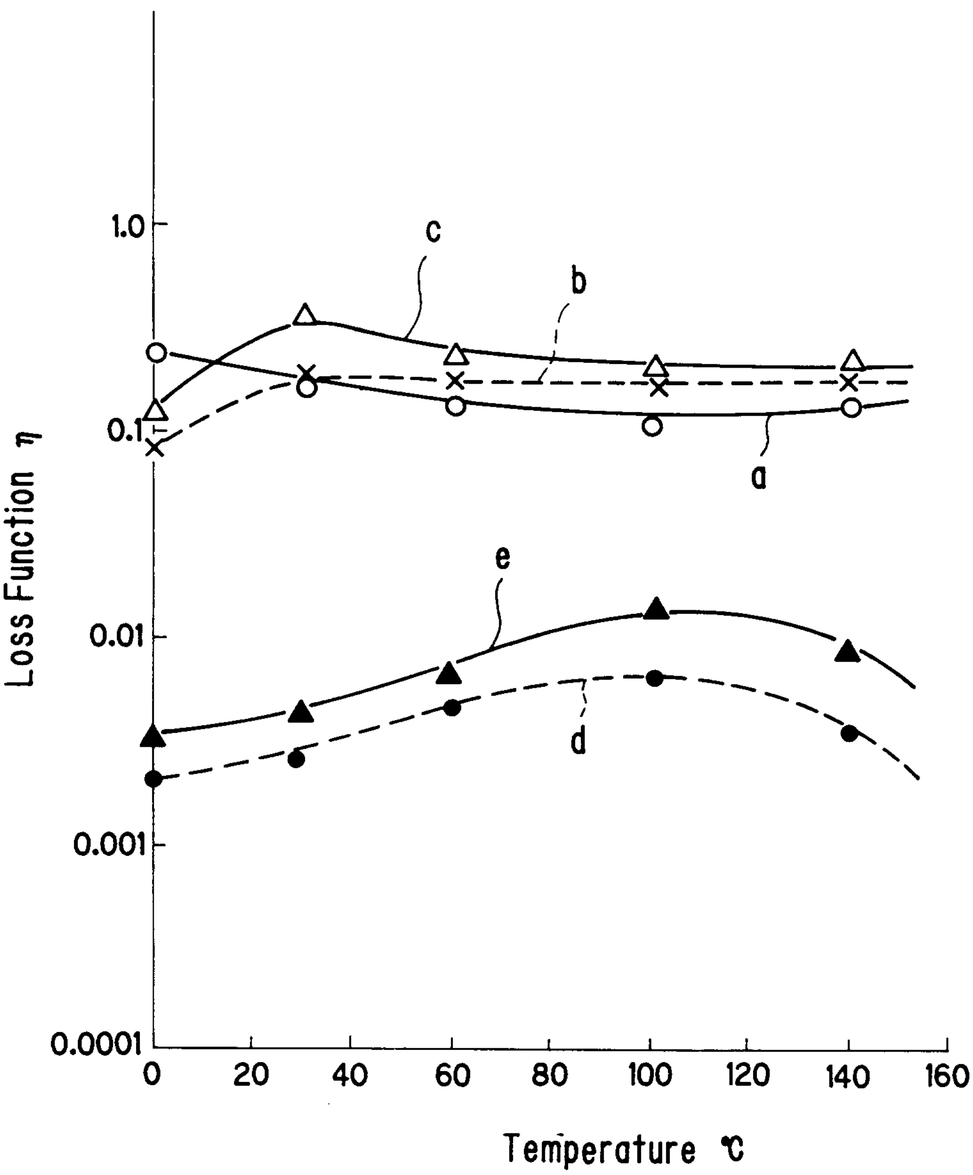
1.0
0.1
0.01
0.001
0.0001
0
20
40
60
80
100
120
140
160
Loss Function η
Temperature ℃
a
b
c
d
e